# EUROPÄISCHE PATENTSCHRIFT

(11) **EP 2 689 954 B1**
(45) Veröffentlichungstag und Bekanntmachung des Hinweises auf die Patenterteilung: **18.12.2019**
(21) Anmeldenummer: 13175013.5
(22) Anmeldetag: 04.07.2013
(51) Int. Cl.: B60L 58/14, B60L 58/12

(54) **Verfahren zur Steuerung des Entladebetriebs einer Traktionsbatterie**
Method for controlling the discharge of a traction battery
Procédé de commande de la décharge d'une batterie de traction

(30) Priorität: 27.07.2012 DE 102012106884; 22.08.2012 DE 102012107700
(43) Veröffentlichungstag der Anmeldung: 29.01.2014
(73) Patentinhaber: STILL GmbH, 22113 Hamburg (DE)
(72) Erfinder: Gütschow, Raphaela, 22041 Hamburg (DE); Wede, Marc, 22941 Bargteheide (DE); Strutz, Jan, 20535 Hamburg (DE)
(74) Vertreter: Patentship Patentanwaltsgesellschaft mbH

(56) Entgegenhaltungen:
- EP-A2- 1 053 972
- EP-A2- 2 110 922
- DE-A1- 19 535 294
- DE-A1-102010 036 397

## Beschreibung

Die Erfindung betrifft ein Verfahren zur Steuerung des Entladebetriebs einer Traktionsbatterie für eine batterie-elektrisch betriebene mobile Arbeitsmaschine. Insbesondere betrifft die Erfindung ein Verfahren zur Steuerung des Entladebetriebs, wobei die Traktionsbatterie eine Batteriesteuervorrichtung zur Erfassung von Betriebsdaten der Traktionsbatterie und zur Anpassung einer Ausgangsspannung und/oder Ausgangsleistung der Traktionsbatterie an Leistungsanschlüssen während eines Entladebetriebs oder zumindest während eines Beginns des Entladebetriebes sowie Kommunikationsmittel zur Übertragung von mindestens einem Parameter der Traktionsbatterie an die mobile Arbeitsmaschine aufweist.

Für elektrisch angetriebene Flurförderzeuge, wie beispielsweise Gabelstapler, aber auch allgemein für elektrisch angetriebene mobile Arbeitsmaschinen werden nach heutigem Stand der Technik in der Regel Traktionsbatterien verwendet, die als Blei-Säure- Batterien und deren Unterarten ausgebildet sind und über die die Stromversorgung eines Fahrantriebs und eines elektrischen Antriebs von Hydraulikpumpen für eine Arbeitshydraulik erfolgt. Um eine lange Lebensdauer der Bleibatterie zu erreichen, müssen Tiefentladungen vermieden werden. Hierfür ist die Erfassung des Ladezustands erforderlich, durch die auch gewährleistet werden kann, dass eine Bedienperson des Flurförderzeugs rechtzeitig informiert wird über einen abnehmenden Ladezustand der Bleibatterie, so dass eine Ladestation für die Bleibatterie bzw. eine Wechselstation zum Austausch der Bleibatterie noch in jedem Fall erreicht werden kann und das Fahrzeug nicht an ungeplanter Stelle liegen bleibt. Die Erfassung des Ladezustands dieser Bleibatterie geschieht in der Regel in der elektrischen Anlage des Flurförderzeugs, in der beispielsweise eine Ruhespannung der Bleibatterie, aber auch eventuell verschiedene andere Parameter wie die abgegebene Energie, erfasst werden und aus diesem Wert bzw. Werten der Ladezustand ermittelt wird, auch bezeichnet als "State of Charge" (SOC).

Bei mobilen, elektrisch angetriebenen Arbeitsmaschinen, wie auch bei Flurförderzeugen, ist bekannt, die elektrische Anlage so auszulegen, dass das Fahrzeugsteuersystem auch unterhalb einer gewissen Schwellenspannung, z. B. 80 % der Nennspannung der Bleibatterie bzw. Traktionsbatterie, beim Einschalten aktiviert wird, jedoch große Leistungsverbraucher wie ein Fahrantrieb oder der elektrische Antrieb einer Hydraulikpumpe für eine Arbeitshydraulik abgeschaltet bleiben. Dies dient dazu, eine Tiefentladung einer Bleibatterie zu vermeiden. Dabei sind im regulären laufenden Betrieb der Arbeitsmaschine nach dem ursprünglichen Einschalten auch niedrigere Batteriespannungen zulässig, die aufgrund der Strombelastung auftreten können.

Als neuere Technologie werden zunehmend Traktionsbatterien auf Lithium-Ionen-Basis eingesetzt, die deutlich größere Batteriekapazitäten und insbesondere eine größere Leistungsdichte als Vorteile bieten. Diese Lithium-Ionenbatterien benötigen eine Überwachungselektronik, um unsichere Zustände wie Über- oder Tiefentladung zu verhindern. Zusätzlich zu diesen beiden Sicherheitsfunktionen ist bekannt, diese Überwachungselektronik zu einer Batteriesteuervorrichtung bzw. einem Batteriemanagementsystem zu erweitern, das die Betriebsdaten der Batterie erfasst und für andere Anwendungen, insbesondere ein Fahrzeugsteuersystem des zugehörigen Fahrzeugs, etwa eines Flurförderzeugs, über eine Kommunikationsverbindung, insbesondere eine eigene, getrennte Datenleitung oder eine drahtlose Verbindung zur Verfügung stellt.

Es ist auch bekannt, bei Lithium-Ionenbatterien wie auch bei anderen Hochleistungsbatterien, eine Leistungselektronik vorzusehen, mit der die Ausgangsspannung an Leistungsanschlüssen auf Spannungswerte umgesetzt wird, die denjenigen von Bleibatterien entsprechen. Hochleistungsbatterien, insbesondere Lithium-Ionenbatterien arbeiten in anderen Spannungsbereichen als die bei Flurförderzeugen üblichen Bleibatterien. Durch die in die Batteriesteuervorrichtung integrierte Leistungselektronik wird dann die Spannung entsprechend umgesetzt.

Wenn von der Leistungselektronik bzw. Batteriesteuervorrichtung erfasste Daten auch den Ladezustand der Batterie beinhalten und die Daten während des Betriebs kontinuierlich an das Flurförderzeug übertragen werden, so kann der Ladezustand von einem Fahrzeugsteuersystem des Flurförderzeugs ausgelesen und für einen Benutzer des Flurförderzeugs in einem Anzeigesystem, etwa einem Display, direkt angezeigt werden.

Verschiedene Arten von Traktionsbatterien haben verschiedene Charakteristika beim Laden und Entladen, die bei der Berechnung des Ladezustands einer Traktionsbatterie zu berücksichtigen sind, etwa indem verschiedene Kennlinienfelder sowie auch Algorithmen für die Berechnung zum Einsatz kommen. Soll ein Flurförderzeug mit verschiedenen Arten von Traktionsbatterie betrieben werden, müssen alle Kennlinienfelder und Algorithmen abgespeichert sein und es muss die jeweils benutzte Art von Traktionsbatterie in dem Fahrzeugsteuersystem des Flurförderzeugs durch eine Eingabe eingestellt werden.

Nachteilig an diesem Stand der Technik ist, dass dieser Schritt von einer Bedienperson bzw. einem Fahrer durchgeführt werden muss, wodurch eine mögliche Fehlerquelle entsteht, da die Traktionsbatterien unter Umständen äußerlich ähnlich aussehen können. Passen die im Flurförderzeug durch die Eingabe eingestellte Art der Traktionsbatterie und die tatsächlich genutzte Traktionsbatterie nicht zueinander, kann dies dazu führen, dass für eine Traktionsbatterie zu lange ein zulässiger Ladezustand angezeigt wird und die Traktionsbatterie dennoch in einen Zustand einer Tiefentladung gebracht wird. Ebenso kann es dazu kommen, dass eine Batterie zu früh als "entladen" angezeigt wird, wodurch Sicherheitsabschaltungen und Funktionsbeschränkungen in dem Flurförderzeug aktiviert werden können. In beiden Fällen wird die Traktionsbatterie nicht optimal genutzt und unter Umständen geschädigt.

Die EP 1 053 972 A2 offenbart ein Flurförderzeug, das ein elektrisches Antriebssystem mit einer Steuereinheit und einen mit dem Antriebssystem verbindbaren, wiederaufladbaren Batterieblock mit einem Datenspeicher aufweist.

Die DE 10 2010 036 397 A1 offenbart eine Batteriesensorvorrichtung zum Erkennen und Überwachen einer Kfz-Starterbatterie. Ein Batterie-Management-System sendet über die Polquellen der Batterien einen Identifizierungscode aus, indem es durch Zuschalten einer elektrischen Last einen leichten Einbruch der entsprechenden Batteriespannung bewirkt. Diese kontrollierten Spannungseinbrüche werden zur Kommunikation genutzt.

Der vorliegenden Erfindung liegt daher die Aufgabe zugrunde, ein Verfahren zur Steuerung des Entladebetriebs einer Traktionsbatterie einer batterie-elektrisch betriebenen mobilen Arbeitsmaschine, insbesondere eines Flurförderzeugs, zur Verfügung zu stellen, mit dem ein sicherer Betrieb sowie eine erleichterte Zuordnung der Art der Traktionsbatterie zu dem Flurförderzeug ermöglicht wird.

Diese Aufgabe wird durch ein Verfahren zur Steuerung des Entladebetriebs einer Traktionsbatterie mit den Merkmalen des Anspruchs 1, eine Traktionsbatterie mit den Merkmalen des Anspruchs 8, ein Verfahren zur Steuerung des Entladebetriebs bei einer batterie-elektrisch betriebenen mobilen Arbeitsmaschine mit den Merkmalen des Anspruchs 10 sowie durch eine mobile Arbeitsmaschine mit den Merkmalen des Anspruchs 13 gelöst. Vorteilhafte Weiterbildungen werden in den Unteransprüchen angegeben.

Die Aufgabe wird durch ein Verfahren zur Steuerung des Entladebetriebs einer Traktionsbatterie für eine batterie-elektrisch betriebene mobile Arbeitsmaschine gelöst, wobei die Traktionsbatterie eine Batteriesteuervorrichtung zur Erfassung von Betriebsdaten der Traktionsbatterie und zur Anpassung einer Ausgangsspannung und/oder Ausgangsleistung der Traktionsbatterie an Leistungsanschlüssen während eines Entladebetriebs oder zumindest während eines Beginns des Entladebetriebes sowie Kommunikationsmittel zur Übertragung von mindestens einem Parameter der Traktionsbatterie an die mobile Arbeitsmaschine aufweist. Die Batteriesteuervorrichtung stellt die Ausgangsspannung und/oder Ausgangsleistung der Traktionsbatterie an den Leistungsanschlüssen bei Inbetriebnahme auf einen Schwellenwert unterhalb der Nennspannung und/oder Nennleistung ein und schaltet im Falle des Empfangs einer Kommunikationsanforderung über die Kommunikationsmittel die Ausgangsspannung und/oder Ausgangsleistung auf den vollen Wert der Nennspannung und/oder Nennleistung, oder erkennt anderenfalls einen Fehlerfall. In dem Fehlerfall wird ein Betrieb der Traktionsbatterie verhindert, indem die Ausgangsspannung von der Batteriesteuervorrichtung unterhalb des Schwellenwerts gehalten oder abgeschaltet wird. Alternativ wird in dem Fehlerfall die Traktionsbatterie in einen Alternativbetriebsmodus für einen Betrieb in einer mobilen Arbeitsmaschine umgeschaltet, die für die Art der Traktionsbatterie nicht vorgesehen ist, und die Ausgangsspannung auf den vollen Wert der Nennspannung geschaltet.

Es können verschiedene Batterietypen bei der mobilen Arbeitsmaschine genutzt werden, sofern ein Fahrzeugsteuersystem dafür vorbereitet ist. Die Entladekurve bzw. Kennlinie einer Bleibatterie ist oftmals in mobilen Arbeitsmaschinen hinterlegt, um die Restladung der Traktionsbatterie von der Arbeitsmaschine berechnen zu können. Traktionsbatterien mit anderer Technik als Bleibatterien benötigen häufig eine Batteriesteuervorrichtung, die zumeist u.a. den Ladezustand berechnet und über die Kommunikationsmittel an das Fahrzeugsteuersystem sendet. Bei der Inbetriebnahme der Traktionsbatterie wird eine Kommunikation zu dem Fahrzeugsteuersystem über die Kommunikationsmittel aufgebaut. Ist der Kommunikationsaufbau erfolgreich, wird als Parameter von der Batteriesteuervorrichtung beispielsweise der Ladezustand an das Fahrzeugsteuersystem übertragen, so dass dieser Ladezustand für eine Bedienperson angezeigt werden kann. Ist der Kommunikationsaufbau nicht erfolgreich, wird dies von der Batteriesteuervorrichtung erfasst und als Fehlerfall erkannt. Auf Seiten der Traktionsbatterie kommen dabei als mögliche Fehlerursachen eine Unterbrechung der Kommunikationsmittel infrage, oder dass die mobile Arbeitsmaschine nicht für diesen Typ einer Traktionsbatterie vorgesehen und vorbereitet ist. Ebenso ist es möglich, dass die mobile Arbeitsmaschine zwar diesen Typ einer Traktionsbatterie nutzen könnte, jedoch nicht für den Kommunikationsstandard ausgerüstet ist. In diesen Fällen darf die Traktionsbatterie nicht betrieben werden. Vorteilhaft wird dies durch das erfindungsgemäße Verfahren sichergestellt. Denkbar sind noch weitere Kommunikationsschritte, um die Zuverlässigkeit der Kommunikation abzusichern und weitere Initialisierungsdaten auszutauschen. Kann keine Kommunikation hergestellt werden, obwohl eine hierfür vorgesehene Traktionsbatterie verwendet wird, kann so zwar das Fahrzeugsteuersystem und die elektrische Anlage der mobilen Arbeitsmaschine zur Fehlerdiagnose genutzt, aber die mobile Arbeitsmaschine nicht bewegt werden. Die Batteriesteuervorrichtung passt die Ausgangsspannung der Leistungsanschlüsse der Traktionsbatterie während des gesamten Entladebetriebs an die Erfordernisse des Flurförderzeugs an. Alternativ ist es auch denkbar, dass die Batteriesteuervorrichtung nur während der Inbetriebnahme bzw. zu Beginn des Entladebetriebs für die Durchführung des erfindungsgemäßen Verfahrens die Ausgangsspannung anpasst und dadurch auch die Ausgangsleistung der Traktionsbatterie regelt. Beispielsweise ist es bei Lithium-Ionenbatterien, die als Ersatz für eine Bleibatterie als Traktionsbatterie eingesetzt werden, nicht zwingend erforderlich, die Spannung umzusetzen, wenn die einzelnen Zellen so geschaltet werden können, dass die Ausgangsspannung bereits den richtigen, angestrebten Wert hat. Es wird dann beispielsweise möglich, nur zu Beginn des Entladebetriebs bzw. bei der Inbetriebnahme die Ausgangsspannung durch die Batteriesteuervorrichtung zu regeln, um das erfindungsgemäße Verfahren durchzuführen. Daran anschließend und in dem normalen Betrieb kann dann beispielsweise keiner Spannungsanpassung erfolgen oder die Spannungsumsetzungsvorrichtung der Batteriesteuervorrichtung über eine geeignete Schaltung, beispielsweise einen Schütz, umgangen werden und an den Leistungsanschlüssen die volle Ausgangsspannung und Ausgangsleistung der Batteriezellen direkt zur Verfügung gestellt werden.

In einer Variante des erfindungsgemäßen Verfahrens wird in dem Fehlerfall ein Betrieb der Traktionsbatterie verhindert, indem die Ausgangsspannung von der Batteriesteuervorrichtung unterhalb des Schwellenwerts gehalten oder abgeschaltet wird.

Dadurch wird sichergestellt, dass es nicht zu einem Betrieb der mobilen Arbeitsmaschine im Fehlerfall kommen kann.

In einer alternativen Variante des erfindungsgemäßen Verfahrens wird in dem Fehlerfall die Traktionsbatterie in einen Alternativbetriebsmodus für einen Betrieb in einer mobilen Arbeitsmaschine umgeschaltet, die für die Art der Traktionsbatterie nicht vorgesehen ist, und die Ausgangsspannung auf den vollen Wert der Nennspannung geschaltet.

Dadurch wird vermieden, dass die mobile Arbeitsmaschine, die für eine Traktionsbatterie mit einer Batteriesteuervorrichtung, beispielsweise einer Lithium-Ionen-Batterie, nicht vorbereitet ist, sich nicht benutzen lässt, weil ein Fehlerfall erkannt wurde. Insbesondere in dem Fall, wenn die mobile Arbeitsmaschine ein Flurförderzeug ist, wie etwa ein Handgabelhubwagen oder ein Gabelstapler, kann jedoch durch die Möglichkeit des Betriebs in dem Alternativbetriebsmodus erreicht werden, dass auch eine moderne Traktionsbatterie bei älteren mobilen Arbeitsmaschinen eingesetzt werden kann, die für solche Traktionsbatterien nicht vorbereitet sind. Die moderne Traktionsbatterie, wie beispielsweise eine Lithium-Ionenbatterie, kann in der Batteriesteuervorrichtung in dem Alternativbetriebsmodus hierfür entsprechende Anpassungen vornehmen, so dass ein solcher Betrieb möglich wird.

Vorteilhaft beträgt der Schwellenwert 80 % der Nennspannung.

Hierbei kann vorteilhaft die Eigenschaft genutzt werden, dass bei dem Einschalten batterie-elektrisch angetriebener mobiler Arbeitsmaschinen bei einer Versorgungsspannung unterhalb eines definierten Grenzwertes zumeist zwar die elektrische Anlage der mobilen Arbeitsmaschine aktiv wird, aber die Leistungselektronik der Antriebe und damit z.B. der Fahrantrieb, oder ein elektrischer Antriebsmotor für eine Hydraulikpumpe der Arbeitshydraulik nicht freigeschaltet werden, um ein Tiefentladen einer Bleibatterie zu verhindern. Ein typischer Wert hierbei ist 80% der Nennspannung. Wenn daher die Ausgangsspannung der Traktionsbatterie an den Leistungsanschlüssen bei Inbetriebnahme bzw. dem Einschalten auf einen Wert unterhalb des Schwellenwertes begrenzt wird, kann dies genutzt werden, um den Typ der Traktionsbatterie erfindungsgemäß zu überprüfen. Im Regelfall entspricht dabei die Begrenzung der Ausgangsspannung einer Begrenzung der Ausgangsleistung der Traktionsbatterie, indem zu einem anliegenden Lastwiderstand des Flurförderzeugs durch eine regelungstechnische Begrenzung der Ausgangsleistung in der Batteriesteuervorrichtung, beispielsweise durch eine Regelung des Ausgangsstroms, auch die anliegende bzw. an dem Flurförderzeug als Lastwiderstand abfallende Spannung herunter geregelt wird. Grundsätzlich kann das erfindungsgemäße Verfahren jedoch auch oder alternativ durch eine Begrenzung der Ausgangsleistung durchgeführt werden. Das erfindungsgemäße Verfahren kann bei Traktionsbatterien angewandt werden, die ständig im Fahrbetrieb die Spannung durch die Batteriesteuervorrichtung umsetzen, oder die Umsetzung der Ausgangsspannung bzw. Ausgangsleistung erfolgt nur im Umfang des erfindungsgemäßen Verfahrens beim Einschalten des Flurförderzeugs.

In einer Ausführungsform der Erfindung wird die Inbetriebnahme von der Batteriesteuervorrichtung durch einen Mindeststrom an den Leistungsanschlüssen erkannt.

Beim Einschalten der elektrischen Anlage der mobilen Arbeitsmaschine, beispielsweise durch Betätigen eines Schaltschlosses, wird ein Schalter geschlossen bzw. ein Hauptschalter geschlossen und dadurch durch einen Mindeststrom für die Batteriesteuervorrichtung die Inbetriebnahme der Traktionsbatterie erkennbar. Alternativ ist auch eine Signalübertragung über die Kommunikationsmittel möglich.

Der mindestens eine übertragene Parameter kann vorteilhaft einen Ladezustand umfassen.

Wenn ein Ladezustand oder "State of Charge" (SOC) übertragen wird, kann einer Bedienperson ein exakter und genauer Wert für den Ladezustand der Traktionsbatterie angezeigt werden.

Die Batteriesteuervorrichtung kann die Ausgangsspannung bei entladener Traktionsbatterie abschalten.

Ist die Traktionsbatterie entladen, schaltet sie sich selbständig ab. Damit ist sichergestellt, dass die Traktionsbatterie nicht tiefentladen werden kann. Auch wenn aufgrund eines eventuell nicht richtig anzeigenden Ladungsanzeigers bei der mobilen Arbeitsmaschine das Risiko entsteht, dass die mobile Arbeitsmaschine weit entfernt von der nächsten Ladestation liegenbleibt, ergibt sich der Vorteil, eine Traktionsbatterie, die keine Bleibatterie ist, wie beispielsweise eine Lithium-Ionenbatterie, auch in nicht dafür vorgesehenen mobilen Arbeitsmaschinen betreiben zu können, da der Fehlerfall bei der anfänglichen Initialisierung nicht zu einer Funktionsverweigerung der mobilen Arbeitsmaschine führt. Diese Lösung ist außerdem ohne viel Aufwand umsetzbar, da es sogar denkbar ist, auf eine Anfrage durch die mobile Arbeitsmaschine für die Inbetriebnahme der Traktionsbatterie zu verzichten.

In einer vorteilhaften Weiterbildung des Verfahrens schaltet die Batteriesteuervorrichtung die Ausgangsspannung bei einer bis zu einem unteren Schwellenwert, insbesondere 10 % der Maximalladung, entladenen Traktionsbatterie ab, wobei die Traktionsbatterie durch ein Schaltsignal wieder reaktiviert werden kann, insbesondere durch einen Hauptschalter der Traktionsbatterie.

Auf diese Weise würde die mobile Arbeitsmaschine zwar noch etwas eher stehenbleiben, aber es bestehen noch Reserven in Bezug auf die Ladung der Traktionsbatterie. Diese können freigeschaltet werden, um die mobile Arbeitsmaschine noch zu einer Ladestation fahren zu können. Dabei sind verschiedene Möglichkeiten für eine Freischaltung der Reserve bzw. Reaktivierung denkbar. Beispielsweise kann eine Bedienperson die Traktionsbatterie über einen Hauptschalter der Traktionsbatterie reaktivieren. Alternativ ist es auch möglich, dass an die Traktionsbatterie über die Kommunikationsmittel ein Signal für die Reaktivierung übertragen wird. Dann kann die Bedienperson, oder beispielsweise im Falle eines Gabelstaplers als mobiler Arbeitsmaschine, bei der die Bedienperson als Fahrer mitfährt, der Fahrer die Traktionsbatterie etwa über das Schaltschloss reaktivieren, woraufhin das Fahrzeugsteuersystem an die Traktionsbatterie ein entsprechendes Signal überträgt. Alternativ ist auch eine Reaktivierung der Traktionsbatterie über einen Taster oder Schalter an der mobilen Arbeitsmaschine denkbar. In einer Alternative ist es vorstellbar, dass der Schwellenwert konfiguriert werden kann, um diesen den Bedürfnissen eines Kunden oder des Einsatzortes der mobilen Arbeitsmaschine anzupassen. Beispielsweise kann auf diese Weise berücksichtigt werden, wie weit der längste Weg zurück zu einer Ladestation an einem Einsatzort sein kann. Auch wenn es hier zu einer durch die Bedienperson nicht kontrollierbaren Abschaltung der Traktionsbatterie und somit der mobilen Arbeitsmaschine kommt, kann eine Ladestation auf jeden Fall erreicht werden.

In einer günstigen Ausgestaltung des Verfahrens reduziert die Batteriesteuervorrichtung die maximale Ausgangsleistung an den Leistungsanschlüssen bei einer bis zu einem unteren Schwellenwert, insbesondere 10 % der Maximalladung, entladenen Traktionsbatterie.

Bei dieser beispielhaften Ausführungsform des erfindungsgemäßen Verfahrens wird die Traktionsbatterie zwar aktiv, wenn keine mobile Arbeitsmaschine bzw. kein Flurförderzeug von der Batteriesteuervorrichtung über die Kommunikationsmittel erkannt wird, jedoch mit verringerter Leistung gegen Ende der Batteriekapazität. Auf diese Weise wird dem Fahrer automatisch durch eine verringerte Beschleunigung und Endgeschwindigkeit des Fahrzeugs signalisiert, dass die Traktionsbatterie geladen werden muss. Der Schwellenwert für den Beginn der Reduzierung der Ausgangsleistung kann entweder ein fester Wert, z. B. 10 % der Maximalleistung der Traktionsbatterie, oder ein konfigurierbarer Wert sein, der einmalig oder individuell von einer Bedienperson eingegeben werden kann. Letzteres bietet den Vorteil, dass eine Anpassung an besondere Gegebenheiten eines Einsatzortes möglich ist, beispielsweise die Länge maximaler Wegstrecken zu einer Ladestation. Vorteilhaft ist hierbei, dass dem Fahrer auch ohne Anzeige des Ladezustands das Erreichen des Endes der Kapazität der Traktionsbatterie signalisiert werden kann. Durch dieses Verfahren kann eine Traktionsbatterie auch in einer nicht dafür vorgesehenen mobilen Arbeitsmaschine genutzt werden, ohne dass ein Fahrer oder eine Bedienperson von einem plötzlichen Ende der Batterieladung verbunden mit einem Ausfall der mobilen Arbeitsmaschine überrascht wird. Vorausgesetzt wird hierbei eine gewisse Sensibilität des Fahrers für das Fahrverhalten, die durch Erfahrung erworben werden muss, um mitzubekommen, dass die Batterieladung der Traktionsbatterie zu Ende geht.

Die Aufgabe wird auch gelöst durch eine Traktionsbatterie für eine mobile Arbeitsmaschine, wobei die Traktionsbatterie eine Batteriesteuervorrichtung zur Erfassung von Betriebsdaten und zur Anpassung einer Ausgangsspannung und/oder Ausgangsleistung an Leistungsanschlüssen der Traktionsbatterie während eines Entladebetriebs oder zumindest während eines Beginns des Entladebetriebes sowie Kommunikationsmittel zur Übertragung von Parametern der Traktionsbatterie an die mobile Arbeitsmaschine aufweist und die Batteriesteuervorrichtung ein zuvor beschriebenes Verfahren durchführen kann.

Diese weist die bereits zuvor geschilderten Vorteile auf.

Vorteilhaft ist die Traktionsbatterie eine Lithium-Ionenbatterie, eine Nickel-Cadmiumbatterie oder eine Nickel-Metallhydridbatterie.

Eine Cadmiumbatterie oder eine Nickel-Metallhydridbatterie benötigt eine Batteriesteuervorrichtung und daher ist auch für diese Arten von Traktionsbatterien die Durchführung des erfindungsgemäßen Verfahrens durch die Batteriesteuervorrichtung mit denselben Vorteilen verbunden, wie bei einer Lithium-Ionenbatterie.

Ebenso wird die Aufgabe gelöst durch ein Verfahren zur Steuerung des Entladebetriebs bei einer batterie-elektrisch betriebenen mobilen Arbeitsmaschine zum Betrieb mit unterschiedlichen Arten von Traktionsbatterien, wobei von einem Fahrzeugsteuersystem über Kommunikationsmittel eine Antwort einer Batteriesteuervorrichtung einer Traktionsbatterie angefordert wird sowie im Falle einer Antwort mindestens ein übermittelter Parameter der Batteriesteuervorrichtung erfasst wird, insbesondere ein Ladezustand der Traktionsbatterie, und alternativ, im Fall einer fehlenden Antwort, eine Berechnung des Ladezustands durch das Fahrzeugsteuersystem erfolgt.

Fahrzeugseitig wird somit wird erzielt, dass bei der Inbetriebnahme der Arbeitsmaschine eine Kommunikation zu der Batteriesteuervorrichtung der Traktionsbatterie über die Kommunikationsmittel aufgebaut wird, wobei eine mit einer Batteriesteuervorrichtung versehene Traktionsbatterie einer derartigen Kommunikationsaufbau erwartet. Ist der Kommunikationsaufbau erfolgreich, wird als Parameter von der Batteriesteuervorrichtung beispielsweise der Ladezustand an das Fahrzeugsteuersystem übertragen, so dass dieser Ladezustand für eine Bedienperson angezeigt werden kann. Ist der Kommunikationsaufbau nicht erfolgreich, wird dies von der Arbeitsmaschine erkannt. Auf Seiten der mobilen Arbeitsmaschine kommen dabei als mögliche Fehlerursachen eine Unterbrechung der Kommunikationsmittel infrage, oder dass eine Traktionsbatterie ohne Batteriesteuervorrichtung in die Arbeitsmaschine eingesetzt ist.

Im Falle einer fehlenden Antwort kann die Berechnung des Ladezustands für eine Bleibatterie erfolgen.

In einem solchen Fall befindet sich eine Traktionsbatterie ohne Batteriesteuervorrichtung in der mobilen Arbeitsmaschine. Als Standard wird in diesem Fall davon ausgegangen, dass eine Bleibatterie genutzt wird, da diese im Normalfall keine Batteriesteuervorrichtung aufweist.

Die bei dem Verfahren zur Steuerung des Entladebetriebs bei einer batterie-elektrisch betriebenen mobilen Arbeitsmaschine eingesetzte Traktionsbatterie mit Batteriesteuervorrichtung kann eine zuvor beschriebene Traktionsbatterie sein.

Das Verfahren weist die bereits geschilderten Vorteile auf.

Die Aufgabe wird auch gelöst durch eine mobile Arbeitsmaschine, die batterie-elektrisch betrieben wird, und eine Traktionsbatterie sowie ein Fahrzeugsteuersystem aufweist, wobei das Fahrzeugsteuersystem ein zuvor beschriebenes Verfahren durchführt.

Die mobile Arbeitsmaschine kann ein Flurförderzeug sein, insbesondere ein Gabelstapler.

Durch die Erfindung wird es möglich, neben einer herkömmlichen, bekannten Bleibatterie auch eine Traktionsbatterie mit abweichender Technologie zu verwenden, wie z. B. Lithium-Ionen Technologie, die eine Batteriesteuervorrichtung benötigt. Außerdem wird es aber auch möglich, eine herkömmliche Bleibatterie einzusetzen, die eine Batteriesteuervorrichtung aufweist. Hierbei muss zwar kein Fehlbetrieb verhindert werden, jedoch kann der der Ladezustand von der Batteriesteuervorrichtung der Bleibatterie an die mobile Arbeitsmaschine übertragen werden, anstatt von dem Fahrzeugsteuersystem der mobilen Arbeitsmaschine berechnet zu werden.

Weitere Vorteile und Einzelheiten der Erfindung werden anhand des in den schematischen Figuren dargestellten Ausführungsbeispiels näher erläutert. Hierbei zeigt
- Fig. 1: eine schematische Ansicht einer erfindungsgemäßen mobilen Arbeitsmaschine mit Traktionsbatterien, bei denen das erfindungsgemäße Verfahren zur Anwendung kommt, und
- Fig. 2: schematisch in einem Flussdiagramm das erfindungsgemäße Verfahren.

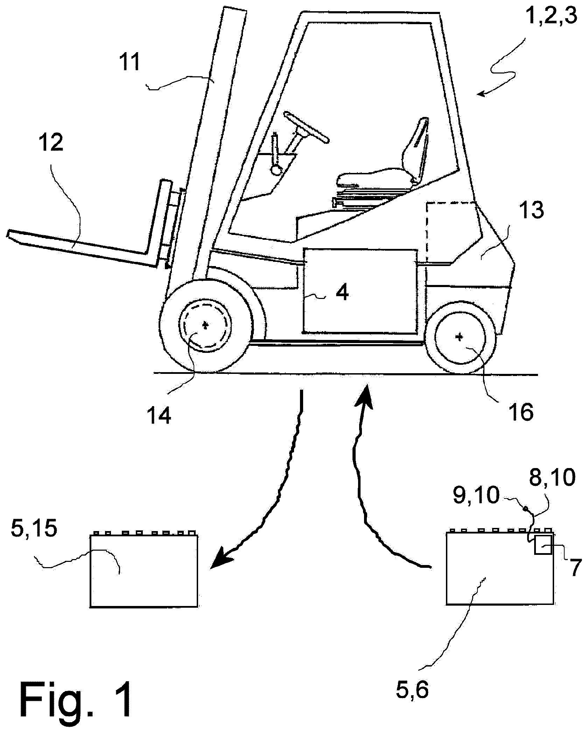

Die Fig. 1 zeigt eine schematische Ansicht einer erfindungsgemäßen mobilen Arbeitsmaschine 1 in einem Ausführungsbeispiel als Flurförderzeug 2, hier in Form eines Gabelstaplers 3 mit einer in ein Batteriefach 4 einsetzbaren erfindungsgemäßen Lithium-Ionenbatterie 6 als Traktionsbatterie 5. Die Lithium-Ionenbatterie 6 weist eine an der Traktionsbatterie 5 angeordnete Batteriesteuervorrichtung 7 auf, die über eine Verbindungsleitung 8 und einen zusätzlichen Stecker 9 mit dem Gabelstapler 3 verbunden werden kann. Der zusätzliche Stecker 9 und die Verbindungsleitung 8 bilden ein Kommunikationsmittel 10. Alternativ kann das Kommunikationsmittel auch von einer drahtlosen Verbindung gebildet werden. Der Gabelstapler 3 weist einen Hubmast 11 mit einer Lastgabel 12 sowie einem Gegengewicht 13 auf. Zwischen einer Vorderachse 14 und einer Hinterachse 16 ist das Batteriefach 4 angeordnet. In dem eingesetzten Zustand kann der Traktionsbatterie 5 elektrische Leistung entnommen werden und können ein nicht dargestellter Fahrantrieb sowie die weiteren Funktionen des Gabelstaplers 3 angetrieben werden, etwa eine Arbeitshydraulik des Hubmastes 11.

Der Gabelstapler 3 weist ein nicht näher dargestelltes Fahrzeugsteuersystem auf, durch das der Ladezustand für eine Bleibatterie 15 als herkömmliche Alternative für eine Traktionsbatterie 5 ermittelt und/oder angezeigt werden kann. Dabei wird die Ruhespannung der Bleibatterie 15 bestimmt, die im Fall keiner oder nur einer verschwindend geringen Leistungsentnahme an den gegenüber den Kommunikationsmitteln 10 separaten Leistungsanschlüssen der Bleibatterie 15 anliegt.

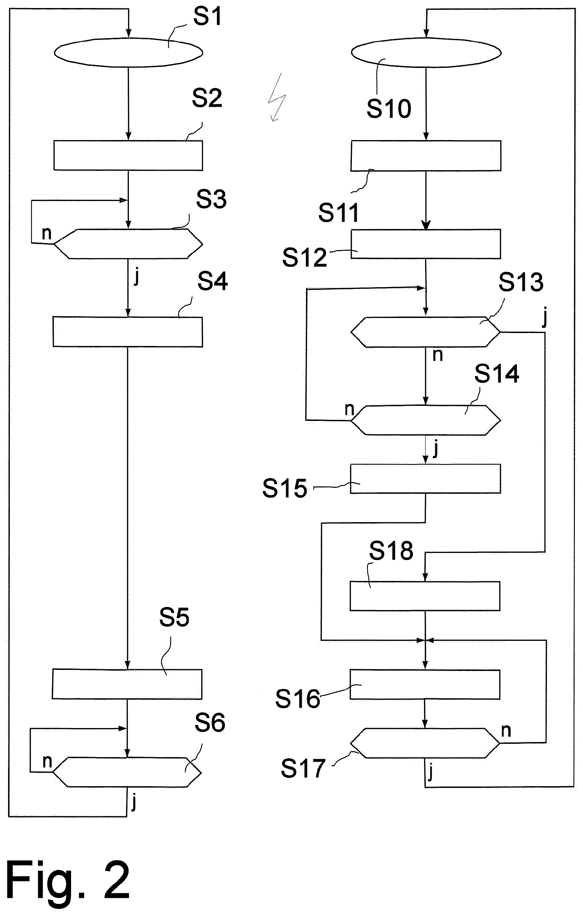

Die Fig. 2 zeigt schematisch in einem Flussdiagramm das erfindungsgemäße Verfahren, wobei in der linken Hälfte der logische Ablauf in der Batteriesteuervorrichtung 7 der Traktionsbatterie 5 dargestellt ist und in der rechten Hälfte der Fig. 2 der logische Ablauf in dem Fahrzeugsteuersystem der mobilen Arbeitsmaschine 1.

Nach dem Start S1, in dem sich die Traktionsbatterie 5 in einem Stand-by-Modus befindet, wird von der mit einer Batteriesteuervorrichtung 7 versehenen Traktionsbatterie 5 in einem Schritt S2 die Ausgangsspannung an den Leistungsanschlüssen der Traktionsbatterie 5 auf einen Wert von unterhalb bzw. auf einen Wert von 80 % der Nennspannung eingestellt. Gleichzeitig, oder auch alternativ ist es möglich, die Ausgangsleistung auf einen entsprechenden Wert unterhalb der Nennleistung zu verringern. In einem Abfrageschritt S3 wird überprüft, ob über die Kommunikationsmittel 10 eine Anfrage von dem Fahrzeugsteuersystem der mobilen Arbeitsmaschine 1 erfolgt. Dies erfolgt zumindest für einen gewissen Abfragezeitraum. In dem folgenden Schritt S4 antwortet die Batteriesteuervorrichtung 7 und in dem Schritt S5 wird die Ausgangsspannung und/oder Ausgangsleistung der Traktionsbatterie 5 auf 100 % der Nennspannung und/oder der Nennleistung geschaltet, wenn eine Anfrage von dem Fahrzeugsteuersystem der mobilen Arbeitsmaschine 1 erfolgte. Dabei ist es möglich, dass in vollständig geladenem Zustand der Traktionsbatterie der Wert der Ausgangsspannung auf mehr als 100 % der Nennspannung geregelt wird. In einem Schritt S6 wird auf eine Abbruchbedingung überprüft und, falls diese erfüllt ist, der logische Ablauf von neuem gestartet. Dies kann beispielsweise der Fall sein, wenn die Traktionsbatterie 5 durch ein Abstellen der mobilen Arbeitsmaschine 1 oder einen Batteriewechsel außer Betrieb genommen wird und ein neuer Start erfolgt.

Rechts daneben ist der zeitlich parallele, logische Ablauf für die mobile Arbeitsmaschine 1 dargestellt. Auch die mobile Arbeitsmaschine 1 befindet sich in einem ersten Schritt S10 in einem Stand-by-Modus und nach einem Startsignal, beispielsweise durch Betätigen eines Schaltschlosses, wie durch das Pfeilsymbol in der Mitte versinnbildlicht, erfolgt in einem Schritt S11 ein Hochlaufen der elektrischen Anlage der mobilen Arbeitsmaschine 1. In einem folgenden Schritt S12 erfolgt über die Kommunikationsmittel 10 bzw. deren entsprechenden Verbindungsteile in der mobilen Arbeitsmaschine 1 eine Anfrage an die Batteriesteuervorrichtung 7 der Traktionsbatterie 5. In einer Abfrage S13 wird überprüft, ob eine Antwort von der Traktionsbatterie 5 empfangen wird. Dabei wird in einem Schritt S14 überprüft, ob ein Timer bzw. ein Abfragezeitraum abgelaufen ist und in einem Schritt S15 eine eigene, fahrzeugseitige Bestimmung eines Ladezustands durch die Arbeitsmaschine aktiviert, wenn keine Antwort von der Traktionsbatterie 5 bis zum Ablauf des Timers erfasst wurde. In diesem Fall wird sodann die Leistungselektronik für die Fahrantriebe und weitere große Stromverbraucher der Arbeitsmaschine freigegeben in einem Schritt S16. Anschließend wird in einem Schritt S17 auf eine Abbruchbedingung überprüft und, falls diese erfüllt ist, der logische Ablauf von neuem gestartet. Wenn in dem Schritt S13 eine Antwort von der Traktionsbatterie 5 erfolgt, so wird in einem Schritt S18 der Empfang eines externen Ladezustands von der Batteriesteuervorrichtung 7 über die Kommunikationsmittel 10 gestartet und zu dem Schritt S16 übergegangen, in dem die Leistungselektronik für die Fahrantriebe und weitere große Stromverbraucher der Arbeitsmaschine freigegeben wird.

Die Erfindung lässt sich ganz allgemein bei jeglicher Art von batterie-elektrisch angetriebenen mobilen Arbeitsmaschinen einsetzen, aber auch bei anderen Ausführungsformen von Flurförderzeugen wie zum Beispiel Gabelhubwagen. Insbesondere lässt sich die Erfindung in Zusammenhang mit anderen Arten von Traktionsbatterien einsetzen, unabhängig von einer Lithium-Ionenbatterie. Insbesondere ermöglicht das erfindungsgemäße Verfahren, dass unterschiedliche Arten von Traktionsbatterien, beispielsweise Bleibatterien und Lithium-ionen-Batterien, in einer Arbeitsmaschine, die für die Nutzung dieser unterschiedlichen Batterietypen vorbereitet ist, flexibel genutzt werden können und die Art der eingesetzten Traktionsbatterie von der Arbeitsmaschine selbstständig erkannt wird, so dass Fehler durch eine manuelle Eingabe der Art der Traktionsbatterie vermieden werden. Es wird dadurch auch ermöglicht, andere Arten von Traktionsbatterie, die spezielle Batteriesteuervorrichtungen und/oder eine bestimmte Kommunikation über das Kommunikationsmittel 10 mit der mobilen Arbeitsmaschine 1 erfordern, einzusetzen, auch wenn die mobile Arbeitsmaschine 1 für diese Art von Traktionsbatterie und/oder Kommunikation nicht vorgesehen ist.

## Patentansprüche

1. Verfahren zur Steuerung des Entladebetriebs einer Traktionsbatterie (5) für eine batterie-elektrisch betriebene mobile Arbeitsmaschine (1), wobei die Traktionsbatterie (5) eine Batteriesteuervorrichtung (7) zur Erfassung von Betriebsdaten der Traktionsbatterie (5) und zur Anpassung einer Ausgangsspannung und/oder Ausgangsleistung der Traktionsbatterie (5) an Leistungsanschlüssen während eines Entladebetriebs oder zumindest während eines Beginns des Entladebetriebes sowie Kommunikationsmittel (10) zur Übertragung von mindestens einem Parameter der Traktionsbatterie (5) an die mobile Arbeitsmaschine (1) aufweist,
**dadurch gekennzeichnet,**
**dass** die Batteriesteuervorrichtung (7) die Ausgangsspannung und/oder Ausgangsleistung der Traktionsbatterie (5) an den Leistungsanschlüssen bei Inbetriebnahme auf einen Schwellenwert unterhalb der Nennspannung und/oder Nennleistung einstellt und im Falle des Empfangs einer Kommunikationsanforderung (S4) über die Kommunikationsmittel (10) die Ausgangsspannung und/oder Ausgangsleistung auf den vollen Wert der Nennspannung und/oder Nennleistung schaltet (S5), oder anderenfalls einen Fehlerfall erkennt, wobei in dem Fehlerfall ein Betrieb der Traktionsbatterie (5) verhindert wird, indem die Ausgangsspannung von der Batteriesteuervorrichtung unterhalb des Schwellenwerts gehalten oder abgeschaltet wird, oder wobei in dem Fehlerfall die Traktionsbatterie (5) in einen Alternativbetriebsmodus für einen Betrieb in einer mobilen Arbeitsmaschine (1) umgeschaltet wird, die für die Art der Traktionsbatterie (5) nicht vorgesehen ist, und die Ausgangsspannung auf den vollen Wert der Nennspannung geschaltet wird.

2. Verfahren nach Anspruch 1,
**dadurch gekennzeichnet,**
**dass** der Schwellenwert 80 % der Nennspannung beträgt.

3. Verfahren nach Anspruch 1 oder 2,
**dadurch gekennzeichnet,**
**dass** die Inbetriebnahme von der Batteriesteuervorrichtung (7) durch einen Mindeststrom an den Leistungsanschlüssen erkannt wird.

4. Verfahren nach einem der Ansprüche 1 bis 3,
**dadurch gekennzeichnet,**
**dass** der mindestens eine übertragene Parameter einen Ladezustand umfasst.

5. Verfahren nach Anspruch 1,
**dadurch gekennzeichnet,**
**dass** die Batteriesteuervorrichtung (7) die Ausgangsspannung bei entladener Traktionsbatterie (5) abschaltet.

6. Verfahren nach einem der Ansprüche 1 oder 5,
**dadurch gekennzeichnet,**
**dass** die Batteriesteuervorrichtung (7) die Ausgangsspannung bei einer bis zu einem unteren Schwellenwert, insbesondere 10 % der Maximalladung, entladenen Traktionsbatterie (5) abschaltet, wobei die Traktionsbatterie (5) durch ein Schaltsignal wieder reaktiviert werden kann, insbesondere durch einen Hauptschalter der Traktionsbatterie (5).

7. Verfahren nach einem der Ansprüche 1, 5 oder 6,
**dadurch gekennzeichnet,**
**dass** die Batteriesteuervorrichtung (7) die maximale Ausgangsleistung an den Leistungsanschlüssen bei einer bis zu einem unteren Schwellenwert, insbesondere 10 % der Maximalladung, entladenen Traktionsbatterie (5) reduziert.

8. Traktionsbatterie für eine mobile Arbeitsmaschine (1), wobei die Traktionsbatterie (5) eine Batteriesteuervorrichtung (7) zur Erfassung von Betriebsdaten und zur Anpassung einer Ausgangsspannung und/oder Ausgangsleistung an Leistungsanschlüssen der Traktionsbatterie (5) während eines Entladebetriebs oder zumindest während eines Beginns des Entladebetriebes sowie Kommunikationsmittel (10) zur Übertragung von mindestens einem Parameter der Traktionsbatterie (5) an die mobile Arbeitsmaschine (1) aufweist und die Batteriesteuervorrichtung (7) derart ausgestaltet ist, ein Verfahren nach einem der Ansprüche 1 bis 7 durchzuführen.

9. Traktionsbatterie nach Anspruch 8,
**dadurch gekennzeichnet,**
**dass** die Traktionsbatterie (5) eine Lithium-Ionenbatterie (6), eine Nickel-Cadmiumbatterie oder eine Nickel-Metallhydridbatterie ist.

10. Verfahren zur Steuerung des Entladebetriebs bei einer batterie-elektrisch betriebenen mobilen Arbeitsmaschine (1) zum Betrieb mit unterschiedlichen Arten von Traktionsbatterien (5), wobei von einem Fahrzeugsteuersystem über Kommunikationsmittel (10) eine Antwort einer Batteriesteuervorrichtung (7) einer Traktionsbatterie (5) angefordert (S13) wird sowie
im Falle einer Antwort mindestens ein übermittelter Parameter der Batteriesteuervorrichtung (7) erfasst (S18) wird, insbesondere ein Ladezustand der Traktionsbatterie (5),
und alternativ im Fall einer fehlenden Antwort eine Berechnung des Ladezustands (S15) durch das Fahrzeugsteuersystem erfolgt.

11. Verfahren nach Anspruch 10,
**dadurch gekennzeichnet,**
**dass** im Falle einer fehlenden Antwort die Berechnung des Ladezustands (S15) für eine Bleibatterie (15) erfolgt.

12. Verfahren nach einem der Ansprüche 10 oder 11,
**dadurch gekennzeichnet,**
**dass** die Traktionsbatterie mit Batteriesteuervorrichtung eine Traktionsbatterie (5) nach einem der Ansprüche 8 oder 9 ist.

13. Mobile Arbeitsmaschine, die batterie-elektrisch betrieben wird und eine Traktionsbatterie (5) sowie ein Fahrzeugsteuersystem aufweist, wobei das Fahrzeugsteuersystem derart ausgestaltet ist, ein Verfahren nach einem der Ansprüche 10 bis 12 durchzuführen.

14. Mobile Arbeitsmaschine nach Anspruch 13,
**dadurch gekennzeichnet,**
**dass** die mobile Arbeitsmaschine (1) ein Flurförderzeug (2), insbesondere ein Gabelstapler (3), ist.

## Claims

1. Method for controlling the discharge operation of a traction battery (5) for an electric battery-operated mobile work machine (1), wherein the traction battery (5) has a battery control apparatus (7) for detecting operating data of the traction battery (5) and for adjusting an output voltage and/or output power of the traction battery (5) at power terminals during a discharge operation or at least during the beginning of the discharge operation as well as communication means (10) for transmitting at least one parameter of the traction battery (5) to the mobile work machine (1),
**characterized in that**
the battery control apparatus (7) sets the output voltage and/or output power of the traction battery (5) at the power terminals during start up to a threshold value below the rated voltage and/or rated power and, in the event of receiving a communication request (S4) via the communication means (10), switches the output voltage and/or output power to the full value of the rated voltage and/or rated power (S5), or otherwise identifies a fault event, wherein, in the fault event, operation of the traction battery (5) is prevented by virtue of the output voltage being held below the threshold value or switched off by the battery control apparatus, or wherein, in the fault event, the traction battery (5) is switched over to an alternative operating mode for operation in a mobile work machine (1), which is not provided for the type of traction battery (5), and the output voltage is switched to the full value of the rated voltage.

2. Method according to Claim 1,
**characterized in that**
the threshold value is 80% of the rated voltage.

3. Method according to Claim 1 or 2,
**characterized in that**
the start up is identified by the battery control apparatus (7) by way of a minimum current at the power terminals.

4. Method according to one of Claims 1 to 3,
**characterized in that**
the at least one transmitted parameter comprises a state of charge.

5. Method according to Claim 1,
**characterized in that**
the battery control apparatus (7) switches off the output voltage when the traction battery (5) is discharged.

6. Method according to either of Claims 1 and 5,
**characterized in that**
the battery control apparatus (7) switches off the output voltage in the case of a traction battery (5) discharged down to a lower threshold value, in particular 10% of the maximum charge, wherein the traction battery (5) can be reactivated again by way of a switching signal, in particular by way of a main switch of the traction battery (5) .

7. Method according to one of Claims 1, 5 or 6,
**characterized in that**
the battery control apparatus (7) reduces the maximum output power at the power terminals in the case of a traction battery (5) discharged down to a lower threshold value, in particular 10% of the maximum charge.

8. Traction battery for a mobile work machine (1), wherein the traction battery (5) has a battery control apparatus (7) for detecting operating data and for adjusting an output voltage and/or output power at power terminals of the traction battery (5) during a discharge operation or at least during the beginning of the discharge operation as well as communication means (10) for transmitting at least one parameter of the traction battery (5) to the mobile work machine (1) and the battery control apparatus (7) is designed in such a way as to carry out a method according to one of Claims 1 to 7.

9. Traction battery according to Claim 8,
**characterized in that**
the traction battery (5) is a lithium ion battery (6), a nickel cadmium battery or a nickel metal hydride battery.

10. Method for controlling the discharge operation in an electric battery-operated mobile work machine (1) for operation with different types of traction batteries (5), wherein a response of a battery control apparatus (7) of a traction battery (5) is requested (S13) by a vehicle control system via communication means (10) and
in the event of a response, at least one transmitted parameter of the battery control apparatus (7) is detected (S18), in particular a state of charge of the traction battery (5),
and, alternatively, in the event of a lack of response, the state of charge (S15) is calculated by way of the vehicle control system.

11. Method according to Claim 10,
**characterized in that**
in the event of a lack of response, the state of charge (S15) for a lead-acid battery (15) is calculated.

12. Method according to either of Claims 10 and 11,
**characterized in that**
the traction battery with battery control apparatus is a traction battery (5) according to either of Claims 8 and 9.

13. Mobile work machine, which is operated by way of an electric battery and has a traction battery (5) as well as a vehicle control system, wherein the vehicle control system is designed so as to carry out a method according to one of Claims 10 to 12.

14. Mobile work machine according to Claim 13,
**characterized in that**
the mobile work machine (1) is an industrial truck (2), in particular a forklift truck (3).

## Revendications

1. Procédé de commande du régime de décharge d'une batterie de traction (5) pour une machine de travail (1) mobile à propulsion électrique par batterie, la batterie de traction (5) possédant un dispositif de commande de batterie (7) destiné à acquérir des données opérationnelles de la batterie de traction (5) et à adapter une tension de sortie et/ou une puissance de sortie de la batterie de traction (5) aux bornes de puissance pendant un régime de décharge ou au moins pendant un début du régime de décharge ainsi que des moyens de communication (10) destinés à la transmission d'au moins un paramètre de la batterie de traction (5) à la machine de travail (1) mobile,
**caractérisé en ce**
**que** le dispositif de commande de batterie (7) règle la tension de sortie et/ou la puissance de sortie de la batterie de traction (5) aux bornes de puissance lors de la mise en service à une valeur de seuil au-dessous de la tension nominale et/ou de la puissance nominale et, dans le cas de la réception d'une demande de communication (S4) par le biais des moyens de communication (10), commute (S5) la tension de sortie et/ou la puissance de sortie à la pleine valeur de la tension nominale et/ou de la puissance nominale ou, dans le cas contraire, reconnaît un cas de défaut, un fonctionnement de la batterie de traction (5) étant empêché dans le cas du défaut **en ce que** le dispositif de commande de batterie maintient la tension de sortie au-dessous de la valeur de seuil ou la déconnecte, ou dans le cas du défaut, la batterie de traction (5) étant permutée dans un mode de fonctionnement alternatif pour un fonctionnement dans une machine de travail (1) mobile qui n'est pas prévue pour le type de la batterie de traction (5) et la tension de sortie étant commutée à la pleine valeur de la tension nominale.

2. Procédé selon la revendication 1, **caractérisé en ce que** la valeur de seuil est égale à 80 % de la tension nominale.

3. Procédé selon la revendication 1 ou 2, **caractérisé en ce que** la mise en service par le dispositif de commande de batterie (7) est reconnue par un courant minimal au niveau des bornes de puissance.

4. Procédé selon l'une des revendications 1 à 3, **caractérisé en ce que** l'au moins un paramètre transmis comprend un état de charge.

5. Procédé selon la revendication 1, **caractérisé en ce que** le dispositif de commande de batterie (7) déconnecte la tension de sortie dans le cas où la batterie de traction (5) est déchargée.

6. Procédé selon l'une des revendications 1 ou 5, **caractérisé en ce que** le dispositif de commande de batterie (7) déconnecte la tension de sortie dans le cas où une batterie de traction (5) est déchargée jusqu'à une valeur de seuil basse, notamment de 10 % de la charge maximale, la batterie de traction (5) pouvant de nouveau être réactivée par un signal de commutation, notamment par un commutateur principal de la batterie de traction (5) .

7. Procédé selon l'une des revendications 1, 5 ou 6, **caractérisé en ce que** le dispositif de commande de batterie (7) réduit la puissance de sortie maximale aux bornes de puissance dans le cas où une batterie de traction (5) est déchargée jusqu'à une valeur de seuil basse, notamment de 10 % de la charge maximale.

8. Batterie de traction pour une machine de travail (1) mobile, la batterie de traction (5) possédant un dispositif de commande de batterie (7) destiné à acquérir des données opérationnelles et à adapter une tension de sortie et/ou une puissance de sortie aux bornes de puissance de la batterie de traction (5) pendant un régime de décharge ou au moins pendant un début du régime de décharge ainsi que des moyens de communication (10) destinés à la transmission d'au moins un paramètre de la batterie de traction (5) à la machine de travail (1) mobile et le dispositif de commande de batterie (7) étant configuré pour mettre en œuvre un procédé selon l'une des revendications 1 à 7.

9. Batterie de traction selon la revendication 8, **caractérisée en ce que** la batterie de traction (5) est une batterie aux ions de lithium (6), une batterie au nickel-cadmium ou une batterie au nickel-hydrure métallique.

10. Procédé de commande du régime de décharge sur une machine de travail (1) mobile à propulsion électrique par batterie destinée à fonctionner avec différents types de batteries de traction (5), une réponse d'un dispositif de commande de batterie (7) d'une batterie de traction (5) étant demandée (S13) par un système de commande de véhicule par le biais de moyens de communication (10) et, dans le cas d'une réponse, au moins un paramètre communiqué du dispositif de commande de batterie (7) étant acquis (S18), notamment un état de charge de la batterie de traction (5) et, en variante, dans le cas d'une absence de réponse, un calcul de l'état de charge (S15) étant effectué par le système de commande de véhicule.

11. Procédé selon la revendication 10, **caractérisé en ce que** dans le cas d'une absence de réponse, le calcul de l'état de charge (S15) est effectué pour une batterie au plomb (15).

12. Procédé selon l'une des revendications 10 ou 11, **caractérisé en ce que** la batterie de traction avec le dispositif de commande de batterie est une batterie de traction (5) selon l'une des revendications 8 ou 9.

13. Machine de travail mobile, qui fonctionne électriquement sur batterie et possède une batterie de traction (5) ainsi qu'un système de commande de véhicule, le système de commande de véhicule étant configuré pour mettre en œuvre un procédé selon l'une des revendications 10 à 12.

14. Machine de travail mobile selon la revendication 13, **caractérisée en ce que** la machine de travail (1) mobile est un chariot de manutention (2), notamment un chariot élévateur à fourche (3).
